Europäisches Patentamt

European Patent Office

Office européen des brevets

(11) Veröffentlichungsnummer: **0 219 725**
**B1**

(12) **EUROPÄISCHE PATENTSCHRIFT**

(45) Veröffentlichungstag der Patentschrift:
28.02.90

(51) Int. Cl.⁴: **G01F 1/60**

(21) Anmeldenummer: 86113423.7

(22) Anmeldetag: 30.09.86

(54) Verfahren zur Kompensation von Störspannungen im Elektrodenkreis bei der magnetisch-induktiven Durchflussmessung.

(30) Priorität: 23.10.85 DE 3537752

(43) Veröffentlichungstag der Anmeldung:
29.04.87 Patentblatt 87/18

(45) Bekanntmachung des Hinweises auf die Patenterteilung:
28.02.90 Patentblatt 90/9

(84) Benannte Vertragsstaaten:
BE CH DE FR GB IT LI NL

(56) Entgegenhaltungen:
EP-A- 0 166 395
DE-B- 2 410 407
DE-C- 2 744 845
DE-C- 3 132 471

(73) Patentinhaber: FLOWTEC AG, Kägenstrasse 4,
CH-4153 Reinach BL 1(CH)

(72) Erfinder: Blatter, Max, Schulackerstrasse 32,
CH-4142 Münchenstein(CH)

(74) Vertreter: Leiser, Gottfried, Dipl.-Ing. et al,
Patentanwälte Prinz, Leiser, Bunke & Partner
Manzingerweg 7, D-8000 München 60(DE)

## Beschreibung

Die Erfindung betrifft ein Verfahren zur Kompensation von Störspannungen im Elektrodenkreis bei der magnetisch-induktiven Durchflußmessung mit periodisch umgepoltem magnetischem Gleichfeld, bei welchem das Magnetfeld in aufeinanderfolgenden Halbperioden abwechselnd gegenpolige Werte annimmt und das Nutzsignal dadurch erhalten wird, daß die Signalspannung in jeder Halbperiode während eines Meßsignal-Abtastintervalls abgetastet, der durch die Abtastung der Signalspannung in jedem Meßsignal-Abtastintervall erhaltene Meßsignalwert gespeichert und die Differenz von jeweils zwei bei gegenpoligen Werten des Magnetfelds erhaltenen Meßsignalwerten gebildet wird, und bei welchem in einem auf jedes Meßsignal-Abtastintervall innerhalb der gleichen Halbperiode folgenden Kompensationsintervall durch Abtastung und Speicherung der Signalspannung eine der Signalspannung entgegengesetzt überlagerte Kompensationsspannung erzeugt wird, welche die Signalspannung innerhalb des Kompensationsintervalls auf den Wert Null kompensiert und bis zum nächsten Kompensationsintervall beibehalten wird.

Verfahren dieser Art sind aus der DE-PS 27 44 845 und aus der DE-PS 31 32 471 bekannt. Bei diesen bekannten Verfahren gibt es in jeder Halbperiode ein Meßsignal-Abtastintervall und ein darauffolgendes Kompensationsintervall. Durch die überlagerte Kompensationsspannung und die Differenzbildung von jeweils zwei nacheinander erhaltenen Signalwerten wird eine in der Signalspannung enthaltene Störgleichspannung unterdrückt, auch wenn diese sich zwischen zwei aufeinanderfolgenden Meßsignal-Abtastintervallen linear ändert. Bei dem Verfahren nach der DE-PS 31 32 471 wird das Magnetfeld am Ende jeder Halbperiode unmittelbar zum gegenpoligen Wert umgepolt. Das Magnetfeld hat daher in jedem Kompensationsintervall den gleichen Wert wie in dem vorhergehenden Meßsignal-Abtastintervall, so daß die im Kompensationsintervall gespeicherte Kompensationsspannung auch die volle Meßspannung enthält. Der durch die Differenzbildung erhaltene Nutzsignalwert entspricht daher der Summe von vier nacheinander abgetasteten Meßspannungswerten, also etwa dem vierfachen Wert des in der Signalspannung enthaltenen Meßspannungsanteils. Demgegenüber folgt bei dem Verfahren nach der DE-PS 27 44 845 in jeder Halbperiode auf eine aktive Phase, in der das Magnetfeld den einen oder den anderen der beiden gegenpoligen Werte annimmt, eine feldfreie Phase, in der das Magnetfeld den Wert Null annimmt. In jeder Halbperiode liegt das Meßsignal-Abtastintervall in der aktiven Phase und das Kompensationsintervall in der feldfreien Phase. In diesem Fall entspricht der durch die Differenzbildung erhaltene Nutzsignalwert der Summe von zwei nacheinander abgetasteten Meßspannungswerten, also etwa dem doppelten Wert des in der Signalspannung enthaltenen Meßspannungsanteils, da die in der feldfreien Phase abgetastete und gespeicherte Kompensationsspannung keinen Meßspannungsanteil enthält.

Bei magnetisch-induktiven Durchflußmessern zeichnen sich zwei Tendenzen ab:
- es besteht ein Trend zu immer höheren Magnetfeldfrequenzen und damit verbunden einem verbesserten Grenzfrequenzverhalten;
- man strebt eine kleinere Leistungsaufnahme an, die jedoch mit einer Reduzierung der Empfindlichkeit verbunden ist.

Die Tendenz, mit immer kleineren Spulenleistungen auszukommen, hat kleinere Feldstärken und entsprechend auch kleinere Signalpegel zur Folge. Dabei nähert sich der Nutzsignal-Pegel immer mehr dem Wechselspannungs-Störpegel, der durch Verstärkerrauschen, Strömungsturbulenzen und ähnliche Effekte verursacht wird und im folgenden in seiner Gesamtheit als Rauschsignal bezeichnet werden soll. Das bekannte Verfahren ist bezüglich der Rauschsignal-Unterdrückung nicht optimal, weil bei jeder Abtastung dem abgetasteten Nutzsignal ein zufälliger Momentanwert des Rauschsignals überlagert wird. Durch die Verwendung von integrierenden RC-Gliedern in den Abtast- und Speicherschaltungen kann zwar eine gewisse Mittelung des Rauschsignals erreicht werden, doch ist diese Wirkung sehr beschränkt, da die RC-Zeitkonstanten stets wesentlich kleiner bemessen werden müssen als die Dauer der zur Verfügung stehenden Abtast- und Kompensations-Intervalle. Wenn die Dauer der Kompensationsintervalle nicht ausreichend lang ist, kann sich die Kompensationsspannung nicht voll auf den neuen Wert einregeln, was zur Folge hat, daß die Kompensationsspannung mit Fehlern behaftet ist, die in das Meßergebnis eingehen. Eine weitere Fehlerquelle besteht darin, daß die einzelnen Meßspannungsanteile, aus denen sich jeder am Ausgang erhaltene Nutzsignalwert zusammensetzt, durch verschiedene Verstärker erhalten werden, die möglicherweise nicht das gleiche Frequenzverhalten haben.

Aufgabe der Erfindung ist die Schaffung eines Verfahrens der eingangs angegebenen Art, bei welchem die Rauschsignale weitgehend unterdrückt sind, eventuelle Fehler der Kompensationsspannung unwirksam gemacht sind und das Meßergebnis nicht durch unterschiedliches Frequenzverhalten von Verstärkern beeinträchtigt wird.

Nach der Erfindung wird diese Aufgabe dadurch gelöst, daß

a) die Signalspannung während eines auf jeden Kompensationsintervall innerhalb der gleichen Halbperiode unmittelbar folgenden Korrektur-Abtastintervalls, in dem die Signalspannung im wesentlichen nur aus Rauschsignalanteilen besteht, erneut abgetastet und der dadurch erhaltene Korrektursignalwert gespeichert wird;

b) die Differenz der jeweils in verschiedenen Halbperioden zwischen zwei Kompensationsintervallen erhaltenen gespeicherten Meß- und Korrektursignalwerte gebildet wird;

c) die Differenz von jeweils zwei auf diese Weise erhaltenen Differenzwerten zur Gewinnung eines Nutzsignalwerts gebildet wird.

Bei dem Verfahren nach der Erfindung erfolgen in jeder Halbperiode zwei Abtastungen der Signalspannung, wobei die erste Abtastung in der bekannten Weise vor dem Kompensationsintervall liegt. Dagegen erfolgt die zweite Abtastung in der gleichen Halbperiode nach dem Kompensationsintervall an der kompensierten Signalspannung, die somit im wesentlichen nur aus Rauschsignalanteilen, eventuellen Fehlern der Kompensationsspannung und zwischenzeitlichen Änderungen der Meßspannung besteht. Durch die zusätzlich vorgenommene Differenzbildung wird der im Korrektur-Abtastintervall erhaltene und gespeicherte Signalwert von dem gespeicherten Signalwert subtrahiert, der in dem Meßsignal-Abtastintervall der folgenden Halbperiode unter Verwendung der gleichen Kompensationsspannung erhalten und gespeichert worden ist. Demzufolge werden die Rauschsignalanteile und eventuelle Fehler der Kompensationsspannung, die in den bei diesen beiden Abtastungen erhaltenen Signalwerten enthalten sind, durch die Differenzbildung eliminiert. Zwei auf diese Weise von Störanteilen befreite, nacheinander erhaltene Differenzwerte werden dann erst als die beiden Signalwerte verwendet, aus denen durch erneute Differenzbildung ein Nutzsignalwert erhalten wird. Dieser Nutzsignalwert ist dann, wie bei dem bekannten Verfahren, auch von der überlagerten Störgleichspannung und von linearen Änderungen dieser Störgleichspannung befreit.

Das Verfahren nach der Erfindung läßt sich sowohl bei einer magnetisch-induktiven Durchflußmessung ohne feldfreie Phasen (wie in der DE-PS 3 132 471) als auch bei einer magnetisch-induktiven Durchflußmessung mit feldfreien Phasen (wie in der DE-PS 2 744 845) anwenden. Der am Ausgang erhaltene Nutzspannungswert entspricht im ersten Fall wieder dem vierfachen Wert und im zweiten Fall wieder dem doppelten Wert des in der Signalspannung enthaltenen Meßspannungsanteils.

Gemäß einer bevorzugten Weiterbildung der Erfindung wird eine besonders gute Unterdrückung des Rauschsignals dadurch erreicht, daß die Signalspannung über die Dauer jedes Abtastintervalls integriert wird und der durch die Integration erhaltene Integrationswert als Signalwert gespeichert wird.

Weitere Ausgestaltungen des erfindungsgemäßen Verfahrens sind in den Unteransprüchen gekennzeichnet.

Ausführungsbeispiele der Erfindung werden anhand der Zeichnung beschrieben. In der Zeichnung zeigt:

Fig. 1 das Blockschema einer Anordnung zur Durchführung des Verfahrens,

Fig. 2 Zeitdiagramme von Signalen, die an verschiedenen Punkten der Anordnung von Fig. 1 auftreten, wenn die magnetisch-induktive Durchflußmessung ohne feldfreie Phasen durchgeführt wird,

Fig. 3 ein Diagramm zur Erläuterung der optimalen Bemessung der Integrationszeit,

Fig. 4 Zeitdiagramme von Signalen, die an verschiedenen Punkten der Anordnung von Fig. 1 auftreten, wenn die magnetisch-induktive Durchflußmessung mit feldfreien Phasen durchgeführt wird, und

Fig. 5 eine abgeänderte Ausführungsform der Anordnung von Fig. 1.

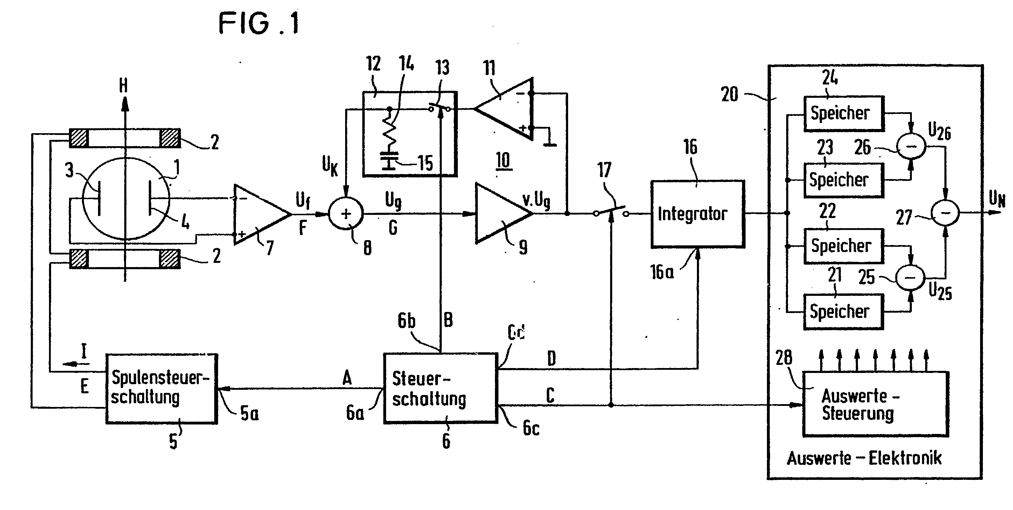

Fig. 1 zeigt schematisch eine Durchflußmeßanordnung, die zum Teil mit der in der DE-PS 31 32 471 dargestellten und beschriebenen Durchflußmeßanordnung übereinstimmt. Die Durchflußmeßanordnung enthält ein innen isoliertes Rohr 1, durch das eine elektrisch leitende Flüssigkeit senkrecht zur Zeichenebene strömt, und die Durchflußmeßanordnung hat den Zweck, ein elektrisches Signal zu liefern, das die mittlere Durchflußgeschwindigkeit der elektrisch leitenden Flüssigkeit im Rohr 1 darstellt. Eine Magnetfeldspule 2, die aus Symmetriegründen in zwei gleiche, zu beiden Seiten des Rohres 1 angeordnete Hälften unterteilt ist, erzeugt im Rohr ein senkrecht zur Rohrachse gerichtetes Magnetfeld H. Im Inneren des Rohres 1 sind zwei Elektroden 3 und 4 angeordnet, an denen eine induzierte Meßspannung abgegriffen werden kann, die nach dem bekannten Meßprinzip der magnetisch-induktiven Durchflußmesser, das auf dem Faradayschen Gesetz beruht, der mittleren Durchflußgeschwindigkeit der elektrisch leitenden Flüssigkeit durch das Magnetfeld proportional ist. Diese Meßspannung ist bei magnetisch-induktiven Durchflußmessern gewöhnlich einer Störgleichspannung überlagert, die ihre Ursache insbesondere in unterschiedlichen elektro-chemischen Gleichgewichtspotentialen hat und im Laufe der Zeit Werte erreichen kann, die ein Vielfaches der Meßspannung betragen.

Eine Spulensteuerschaltung 5 steuert den durch die Magnetfeldspule 2 fließenden Strom in Abhängigkeit von einem Steuersignal A, das vom Ausgang 6a einer Steuerschaltung 6 geliefert und an einen Steuereingang 5a der Spulensteuerschaltung 5 angelegt wird.

Die Elektroden 3 und 4 sind mit den beiden Eingängen eines Differenzverstärkers 7 verbunden. Der Differenzverstärker 7 hat eine kleine Verstärkung, so daß er auch bei einer großen Störgleichspannung (im typischen Fall ± 1V) nicht übersteuert werden kann. Der Ausgang des Differenzverstärkers 7 ist mit einem Eingang einer Summierschaltung 8 verbunden, an deren Ausgang der Eingang eines Verstärkers 9 mit dem Verstärkungsfaktor v angeschlossen ist.

Der andere Eingang der Summierschaltung 8 ist mit dem Ausgang des Verstärkers 9 durch eine Kompensationsschaltung 10 bekannter Art verbunden, die den Zweck hat, die in der Ausgangsspannung $U_f$

des Differenzverstärkers 7 enthaltene Störgleichspannung zu unterdrücken und dadurch vom Eingang des Verstärkers 9 fernzuhalten, damit dieser nicht übersteuert wird. Die Kompensationsschaltung 10 enthält einen Operationsverstärker 11, dessen invertierender Eingang an den Ausgang des Verstärkers 9 angeschlossen ist und dessen nicht invertierender Eingang, der als Bezugseingang dient, an Masse gelegt ist. An den Ausgang des Operationsverstärkers 11 ist eine Abtast- und Speicherschaltung 12 angeschlossen, die einen Schalter 13, einen Widerstand 14 und einen Speicherkondensator 15 enthält. Der Schalter 13 wird durch ein vom Ausgang 6b der Steuerschaltung 6 geliefertes Steuersignal B betätigt. Der Ausgang der Abtast- und Speicherschaltung 12 ist mit dem zweiten Eingang der Summierschaltung 8 verbunden.

Wenn der Schalter 13 geschlossen ist, besteht ein geschlossener Regelkreis vom Ausgang des Verstärkers 9 über den Operationsverstärker 11, die Abtast- und Speicherschaltung 12 und die Summierschaltung 8 zum Eingang des Verstärkers 9. Dieser Regelkreis bringt die Spannung am invertierenden Eingang des Operationsverstärkers 11, d.h. die Ausgangsspannung des Verstärkers 9, auf das am nicht invertierenden Eingang anliegende Bezugspotential, also das Massepotential. Der Ausgang der Abtast- und Speicherschaltung 12 nimmt daher in jedem durch das Schließen des Schalters 13 bestimmten Kompensationsintervall eine Kompensationsspannung $U_k$ an, die der am anderen Eingang der Summierschaltung 8 gleichzeitig anliegenden, vom Ausgang des Differenzverstärkers 7 gelieferten Signalspannung $U_f$ entgegengesetzt gleich ist, so daß die Ausgangsspannung $U_g$ der Summierschaltung 8 und damit auch die Ausgangsspannung $v \cdot U_g$ des Verstärkers 9 zu Null gemacht wird. Der Speicherkondensator 15 lädt sich über den Widerstand 14 auf diese Kompensationsspannung $U_k$ auf, so daß diese auch nach dem Öffnen des Schalters 13, also in der Haltephase der Abtast- und Speicherschaltung 12, an deren Ausgang bestehen bleibt. Diese gespeicherte Kompensationsspannung $U_k$ wird somit bis zum nächsten Kompensationsintervall in der Summierschaltung 8 zu der jeweils anliegenden Signalspannung $U_f$ addiert.

Um zu verhindern, daß sich der Kondensator 15 nach dem Öffnen des Schalters 13 entlädt, kann dem Ausgang der Abtast- und Speicherschaltung 12 in üblicher Weise ein Impedanzwandler nachgeschaltet sein; dieser ist zur Vereinfachung der Zeichnung nicht dargestellt.

Der Widerstand 14 und der Kondensator 15 bilden zusammen ein Integrierglied, dessen Zeitkonstante bewirkt, daß die Klemmenspannung des Kondensators 15 Änderungen der Ausgangsspannung des Operationsverstärkers 11 nicht verzögerungsfrei folgen kann. Dadurch werden schnelle Änderungen der Ausgangsspannung des Operationsverstärkers 11 während der Schließzeit des Schalters 13 gemittelt, doch ist es auch erforderlich, die Dauer des Kompensationsintervalls und die Zeitkonstante des Integrierglieds so aufeinander abzustimmen, daß sich die Kompensationsspannung $U_k$ in jedem Kompensationsintervall auf den erforderlichen Wert einregeln kann.

An den Ausgang des Verstärkers 9 ist ferner ein Integrator 16 über einen Schalter 17 angeschlossen. Der Schalter 17 wird durch ein von einem Ausgang 6c der Steuerschaltung 6 abgegebenes Steuersignal C betätigt. Der Integrator 16 hat einen Rücksetzeingang 16a, der mit einem weiteren Ausgang 6d der Steuerschaltung 6 verbunden ist. Die Steuerschaltung 6 gibt am Ausgang 6d ein Steuersignal D ab, das aus kurzen Rücksetzimpulsen besteht. Jeder dem Eingang 16a zugeführte kurze Rücksetzimpuls setzt den Integrator 16 in einen vor gegebenen Anfangszustand für die Integration zurück. Der Anfangszustand ist vorzugsweise der Zustand Null, was im folgenden angenommen wird.

Wenn der Schalter 17 geschlossen ist, liegt die Ausgangsspannung $v \cdot U_g$ des Verstärkers 9 am Signaleingang des Integrators 16 an. Der Integrator 16 integriert die Spannung $v \cdot U_g$ von dem durch den vorhergehenden Rückstellimpuls bestimmten Anfangszustand Null an über die Dauer des durch die Schließzeit des Schalters 17 bestimmten Integrationsintervalls. Am Ende jedes Integrationsintervalls steht am Ausgang des Integrators 16 ein Ausgangssignal zur Verfügung, das dem Integrationswert der Spannung $v \cdot U_g$ über die Integrationszeit entspricht.

An den Ausgang des Integrators 16 ist eine Auswerte-Elektronik 20 angeschlossen, die aus den vom Integrator 16 gelieferten Integrationswerten Nutzsignalwerte $U_N$ bildet, die die zu messende Durchflußgeschwindigkeit darstellen. Die Auswerte-Elektronik 20 ist so ausgebildet, daß sie vier vom Integrator 16 nacheinander gelieferte Integrationswerte getrennt speichern und vorgeschrieben Differenzen zwischen den gespeicherten Integrationswerten bilden kann. Bei der in Fig. 1 schematisch dargestellten Ausführungsform enthält die Auswerte-Elektronik 20 zu diesem Zweck vier Speicher 21, 22, 23, 24 und drei Subtrahierschaltungen 25, 26, 27. Wenn die Ausgangssignale des Integrators 16 Analogsignale sind, können die Bestandteile der Auswerte-Elektronik 20 Analogschaltungen sein, die in der dargestellten Weise miteinander verbunden sind und deren Betrieb durch eine Auswerte-Steuerung 28 gesteuert wird, die ebenfalls in der Auswerte-Elektronik 20 enthalten ist. Die Auswerte-Steuerung 28 wird in der erforderlichen Weise mit dem Betrieb des Integrators 16 synchronisiert, was, wie in Fig. 1 dargestellt ist, beispielsweise dadurch geschehen kann, daß sie ebenfalls das Steuersignal C vom Ausgang 6c der Steuerschaltung 6 empfängt. In der Regel wird es vorgezogen, die Auswerte-Elektronik 20 für eine digitale Signalverarbeitung auszubilden, vorzugsweise durch Verwendung eines Mikrocomputers. Die in Fig. 1 diskret dargestellten Speicher 21, 22, 23, 24 sind dann Speicherbereiche des Arbeitsspeichers des Mikrocomputers, und die Funktionen der Subtrahierschaltungen 25, 26, 27 werden vom Mikroprozessor des Mikrocomputers ausgeführt, wobei das Arbeitsprogramm des Mikrocomputers die Funktio-

4

nen der Auswerte-Steuerung 28 übernimmt. Zwischen dem Integrator 16 und der Auswerte-Elektronik 20 kann dann ein Analog-Digital-Umsetzer angeordnet sein, der die analogen Ausgangssignale des Integrators 16 in digitale Signale umsetzt, die für die Verarbeitung im Mikrocomputer geeignet sind. Vorzugsweise ist jedoch der Integrator 16 in diesem Fall so ausgebildet,daß er unmittelbar digitale Signale liefert, die die Integrationswerte darstellen.

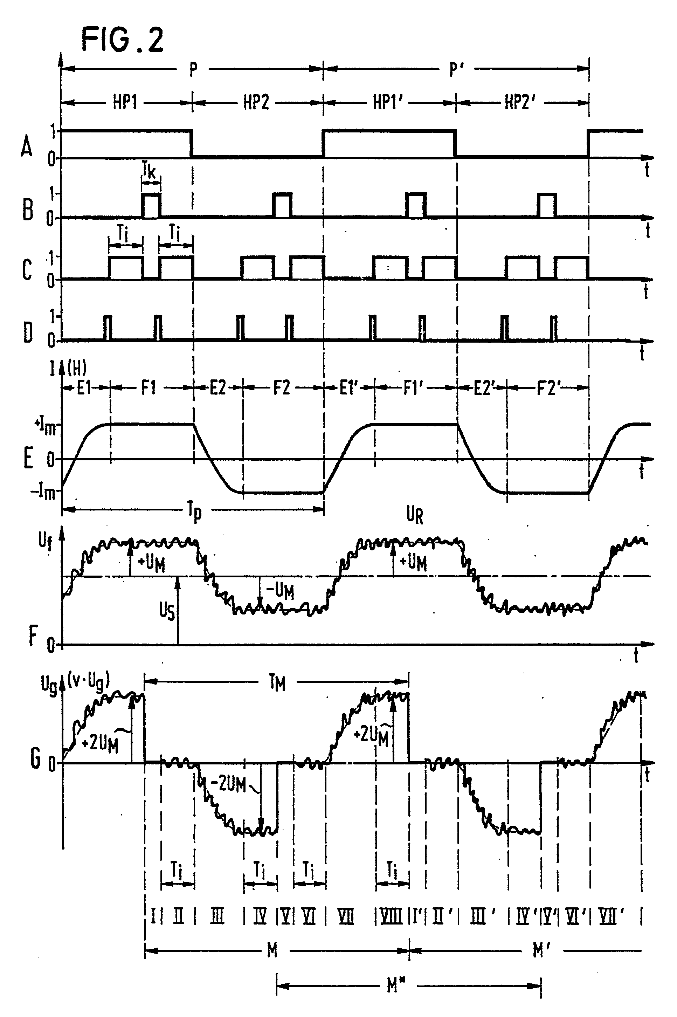

Die Diagramme A, B, C, D, E, F, G von Fig. 2 zeigen den zeitlichen Verlauf von Signalen, die an den mit den gleichen Buchstaben bezeichneten Schaltungspunkten von Fig. 1 auftreten, wenn die Durchflußmeßanordnung ohne feldfreie Phasen betrieben wird, wie dies in der DE-PS 31 32 471 beschrieben ist.

Die Diagramme A, B, C, D stellen die von der Steuerschaltung 6 abgegebenen Steuersignale dar, die entweder den Signalwert 1 oder den Signalwert 0 annehmen. Das im Diagramm A dargestellte Steuersignal A, das der Spulensteuerschaltung 5 zugeführt wird, ist ein periodisches Rechtecksignal, von welchem zwei aufeinanderfolgende Perioden P und P′ dargestellt sind. Das Steuersignal A nimmt in der Periode P während einer Halbperiode HP1 den Signalwert 1 und während der anderen Halbperiode HP2 den Signalwert 0 an. Die entsprechenden Halbperioden der folgenden Periode P′ sind mit HP1′ und HP2′ bezeichnet.

Bei den an die Schalter 13 und 17 angelegten Steuersignalen B bzw. C bedeutet der Signalwert 1 das Schließen des Schalters und der Signalwert 0 das Öffnen des Schalters. Jeder Rechteckimpuls des Signalwerts 1 im Diagramm B bestimmt also ein Kompensationsintervall der Dauer $T_k$, in dessen Verlauf die Spannung $U_g$ am Ausgang der Summierschaltung 8 auf Null kompensiert wird. Jeder Rechteckimpuls des Signalwerts 1 im Diagramm C bestimmt ein Abtast- und Integrationsintervall der Dauer $T_i$,in dessen Verlauf die Spannung $v \cdot U_g$ abgetastet und im Integrator 16 integriert wird.

Die Rücksetzimpulse des Diagramms D sind kurze Impulse, die zeitlich jeweils kurz vor den Rechteckimpulsen des Diagramms C erscheinen.

Die Spulensteuerschaltung 5 ist so ausgebildet, daß sie beim Signalwert 1 des Steuersignals A einen Gleichstrom konstanter Größe in der einen Richtung und beim Signalwert 0 des Steuersignals A einen Gleichstrom der gleichen Größe, jedoch entgegengesetzter Richtung durch die Magnetfeldspule 2 zu schicken sucht. Die Spulensteuerschaltung 5 enthält einen Stromregler, der den Strom bei jeder Polarität auf den gleichen konstanten Wert $+I_m$ bzw. $-I_m$ regelt. Der Verlauf des durch die Magnetfeldspule 2 fließenden Stroms ist im Diagramm E dargestellt. Infolge der Induktivität der Magnetfeldspule erreicht der Strom nach jeder Umschaltung den konstanten Wert $I_m$ der entgegengesetzten Polarität nur mit einer gewissen Verzögerung. Im Diagramm E ist angenommen, daß bei der Umschaltung vom negativen zum positiven Wert in der Halbperiode HP1 der geregelte positive Wert $+I_m$ innerhalb einer Einschwingzeit E1 erreicht wird und und daß während der restlichen Zeit F1 der Halbperiode HP1 der konstante Stromwert $+I_m$ besteht. In entsprechender Weise wird bei der Umschaltung vom positiven zum negativen Wert in der Halbperiode HP2 der konstante negative Wert $-I_m$ innerhalb der Einschwingzeit E2 erreicht und während der restlichen Zeit F2 beibehalten. Die gleichen Vorgänge wiederholen sich in den entsprechenden Zeitabschnitten E1′, F1′, E2′, F2′ der folgenden Periode P′ und in jeder weiteren Periode in gleicher Weise.

Das Magnetfeld H zeigt den gleichen zeitlichen Verlauf wie der Strom I, so daß das Diagramm E auch für das Magnetfeld H gilt. Das Magnetfeld H hat während des Zeitintervalls F1 eine konstante Feldstärke $H_m$ der einen Polarität und während des Zeitintervalls F2 die gleiche konstante Feldstärke $H_m$ der entgegengesetzten Polarität. Die Periodendauer $T_P$ der Magnetfeldperiode ist gleich der Dauer jeder Periode P, P′,...des Steuersignals A, und die Magnetfeldperioden fallen mit den Perioden P, P′,...des Steuersignals A zeitlich zusammen.

Das Diagramm F zeigt den zeitlichen Verlauf der Signalspannung $U_f$ am Ausgang des Differenzverstärkers 7. Die Spannung $U_f$ enthält einen Meßspannungsanteil $U_M$, der der Durchflußgeschwindigkeit im Rohr 1 und der Feldstärke des Magnetfelds H proportional ist. Bei konstanter oder im Verhältnis zur Periodendauer $T_P$ nur langsam veränderlicher Durchflußgeschwindigkeit hat der Meßspannungsanteil $U_M$ somit den gleichen zeitlichen Verlauf wie das Magnetfeld H bzw. wie der Strom I im Diagramm E. Dieser zeitliche Verlauf des Meßspannungsanteils $U_M$ ist im Diagramm F mit gestrichelter Linie dargestellt. Die Meßspannung $U_M$ ist der Störgleichspannung $U_S$ überlagert, die ihre Ursache insbesondere in unterschiedlichen elektro-chemischen Gleichgewichtspotentialen hat und unabhängig vom Magnetfeld und von der Durchflußgeschwindigkeit ist. Die Störgleichspannung $U_S$ ist zeitlich nicht konstant, sondern sie verändert sich allmählich. Sie kann Werte erreichen, die ein Vielfaches der Meßspannung $U_M$ betragen können. Die zeitliche Änderung der Störgleichspannung $U_S$ ist im Diagramm F zur Vereinfachung nicht dargestellt; sie ist gewöhnlich im Verlauf einer Periodendauer auch sehr gering.

Schließlich ist der Meßspannung $U_M$ ein Rauschsignal $U_R$ überlagert, das durch Verstärkerrauschen, Strömungsturbulenzen und andere Störeinflüsse erzeugt wird. Somit hat die am Ausgang des Differenzverstärkers 7 abgegebene Sig nalspannung $U_f$ den Verlauf, der im Diagramm F durch eine volle Linie dargestellt ist.

Das Diagramm G zeigt die durch die Wirkung der Kompensationsschaltung 10 am Ausgang der Summierschaltung 8 erhaltene Spannung $U_g$. Die Kompensationsspannung $U_k$ nimmt in jedem Kompensations-

intervall, also während jedes Zeitintervalls, in dem das Steuersignal B den Signalwert 1 hat, den gleichen Betrag wie die Signalspannung $U_f$, aber das entgegengesetzte Vorzeichen an, und sie behält den Wert, den sie am Ende eines Kompensationsintervalls erreicht hat, bis zum Beginn des nächsten Kompensationsintervalls bei. Durch die Kompensation wird die Spannung $U_g$ in jedem Kompensationsintervall auf den Wert Null gebracht, und da die Kompensationsspannung $U_k$ auch nach dem Ende des Kompensationsintervalls der Spannung $U_f$ weiterhin überlagert bleibt, ergibt sich der im Diagramm G dargestellte zeitliche Verlauf der Spannung $U_g$.

Da sich die Ausgangsspannung $v \cdot U_g$ des Verstärkers 9 von der Spannung $U_g$ nur durch den Verstärkungsfaktor v unterscheidet, gilt das Diagramm G, abgesehen von einem anderen Spannungsmaßstab, auch für die Ausgangsspannung des Verstärkers 9.

Unter dem Diagramm G ist ein vollständiger Meßzyklus M eingetragen und in acht Zeitabschnitte I, II, III, IV, V, VI, VII, VIII unterteilt. Der folgende Meßzyklus ist mit M' bezeichnet, und seine Zeitabschnitte tragen dementsprechend die Bezeichnungen I', II', III', IV' ... . Als Meßzyklus wird jeweils das Zeitintervall bezeichnet, in dessen Verlauf alle Signalwerte erhalten werden, die zur Bildung eines Nutzsignalwerts $U_N$ verwendet werden. Die Dauer $T_M$ jedes Meßzyklus ist gleich der Periodendauer $T_P$ der Magnetfeldperiode, doch sind die Meßzyklen M gegen die Magnetfeldperioden P zeitlich versetzt.

Der erste Zeitabschnitt I des Meßzyklus M entspricht einem Rechteckimpuls des Steuersignals B, also einem Kompensationsintervall der Dauer $T_k$. In diesem Kompensationsintervall wird die Kompensationsspannung $U_{k(I)}$ gebildet, die der im gleichen Zeitintervall bestehenden Signalspannung $U_{f(I)}$ entgegengesetzt gleich ist. Die durch die Summierung der Spannungen $U_{f(I)}$ und $U_{k(I)}$ am Ausgang der Summierschaltung 8 erhaltene Spannung $U_{g(I)}$ wird daher im Zeitabschnitt I im wesentlichen auf den Wert Null gebracht.

Kurz vor dem Beginn des Zeitabschnitts II wird der Integrator 16 durch einen Rücksetzimpuls D auf Null zurückgesetzt.

Der Zeitabschnitt II fällt mit einem Impuls des Steuersignals C zusammen und ist somit ein Abtast- und Integrationsintervall der Dauer $T_i$, in dessen Verlauf die Spannung $v \cdot U_{g(II)}$ am Ausgang des Verstärkers 9 durch Schließen des Schalters 17 abgetastet und im Integrator 16 integriert wird.

Im Zeitabschnitt II ist die Regelschleife der Kompensationsschaltung 10 geöffnet, doch wird die Kompensationsspannung $U_{k(I)}$ weiterhin der Spannung $U_f$ überlagert. Die Spannung $U_{f(II)}$ im Zeitabschnitt II unterscheidet sich von der Spannung $U_{f(I)}$ im vorhergehenden Zeitabschnitt I allenfalls durch einen geringfügigen Anstieg der Störgleichspannung $U_S$ und durch eine eventuelle Änderung der Meßspannung $U_M$ bei nicht konstanter Strömungsgeschwindigkeit, vor allem aber durch die Unregelmäßigkeiten des überlagerten Rauschsignals $U_R$. Wenn angenommen wird, daß die Störgleichspannung $U_S$ und die Meßspannung $U_M$ unverändert geblieben sind, besteht somit die Spannung $U_{g(II)}$ im Zeitintervall II im wesentlichen nur aus Rauschsignalanteilen, während die Meßspannung $U_{M(II)}$ und die Störgleichspannung $U_{S(II)}$ weiterhin durch die Kompensationsspannung $U_{k(I)}$ wegkompensiert sind. Die entsprechende verstärkte Spannung $v \cdot U_{g(II)}$ am Ausgang des Verstärkers 9 wird also im Zeitabschnitt II durch Schließen des Schalters 17 abgetastet und im Integrator 16 über die Integrationszeit $T_i$ von Null an aufintegriert. Die Integration endet mit dem Öffnen des Schalters 17 am Ende des Zeitabschnitts II. Am Ausgang des Integrators 16 steht dann das Integrationsergebnis als Integrationswert $\overline{U}_{g(II)}$ zur Verfügung.

Die im Zeitabschnitt II abgetasteten und integrierten Rauschsignalanteile und möglichen Fehler der Kompensationsspannung $U_k$ werden, wie später noch erläutert wird, zur Korrektur des Meßergebnisses verwendet. Daher kann der Zeitabschnitt II als "Korrektur-Abtastintervall" bezeichnet werden.

Nach Beendigung des Zeitabschnitts II wird der Integrationswert $\overline{U}_{g(II)}$ durch die Auswerte-Steuerung 28 in den Speicher 21 eingegeben. Dieser Vorgang kann beispielsweise durch die abfallende Flanke des Rechteckimpulses des Steuersignals C ausgelöst werden.

Der folgende Zeitabschnitt III entspricht der Einschwingzeit E2 in der Halbperiode HP2, in welcher der Strom I in der Magnetfeldspule vom positiven Wert $+I_m$ auf den negativen Wert $-I_m$ übergeht und somit das Magnetfeld H umgepolt wird. Da das Magnetfeld H in diesem Zeitabschnitt nicht konstant ist, kann der Zeitabschnitt III nicht für die Durchflußmessung ausgenutzt werden.

Kurz vor dem Beginn des Zeitabschnitts IV wird der Integrator 16 durch einen Rückstellimpuls D auf Null zurückgesetzt.

Der Zeitabschnitt IV ist wieder ein Abtast- und Integrationsintervall, da er mit einem Impuls des Steuersignals C zusammenfällt. Der Zeitabschnitt IV entspricht dem vor dem nächsten Kompensationsintervall liegenden Teil des Zeitintervalls F2, in welchem der Strom I seinen konstanten negativen Wert $-I_m$ hat und das Magnetfeld H in der gegenpoligen Richtung konstant ist. Der Meßspannungsanteil $U_M$ in der Spannung $U_{f(IV)}$ hat daher nunmehr das umgekehrte Vorzeichen (negativ), während das Vorzeichen der Störgleichspannung $U_S$ unverändert bleibt. Da der Spannung $U_{v(IV)}$ weiterhin die im Zeitabschnitt I gebildete Kompensationsspannung $U_{k(I)}$ überlagert wird, addiert sich nunmehr der in der Kompensationsspannung $U_{k(I)}$ enthaltene Meßspannungsanteil $-U_M$ zu dem negativen Meßspannungsanteil $-U_M$ der Spannung $U_{f(IV)}$, während sich die Störgleichspannungsanteile US weiterhin gegenseitig aufheben. Die Span-

nung $U_{g(IV)}$ besteht also im Zeitabschnitt IV im wesentlichen aus dem doppelten Wert der Meßspannung (mit negativem Vorzeichen) und dem überlagerten Rauschsignal.

Die entsprechende Spannung $v \cdot U_{g(IV)}$ wird während der Dauer des Zeitabschnitts IV durch Schließen des Schalters 17 abgetastet und im Integrator 16 über die Integrationszeit $T_i$ von Null an aufintegriert. Da die abgetastete Signalspannung im wesentlichen aus dem nutzbaren Meßspannungsanteil $-2U_M$ besteht, handelt es sich beim Zeitabschnitt IV um ein "Meßsignal-Abtastintervall".

Am Ende des Zeitabschnitts IV ist am Ausgang des Integrators 16 der Integrationswert $\overline{U_{g(IV)}}$ verfügbar. Dieser Integrationswert wird durch die Auswerte-Steuerung 28 in den Speicher 22 eingegeben.

Mit dem Zeitabschnitt IV ist die erste Hälfte des Meßzyklus M abgelaufen. In den Zeitabschnitten V, VI, VII, VIII der zweiten Hälfte wiederholen sich die gleichen Vorgänge bei den entgegengesetzten Vorzeichen von Strom, Magnetfeld und Meßspannung.

Der Zeitabschnitt V ist wieder ein Kompensationsintervall der Dauer $T_k$, in welchem die Kompensationsspannung $U_{k(V)}$ gebildet wird, die der im gleichen Zeitabschnitt bestehenden Signalspannung $U_{f(V)}$ entgegengesetzt gleich ist. Durch die Summierung dieser beiden Spannungen wird die Spannung $U_{g(V)}$ am Ausgang der Summierschaltung 8, wie im Zeitabschnitt I, im wesentlichen auf den Wert Null gebracht. Kurz vor Beginn des Zeitabschnitts VI wird der Integrator 16 durch einen Rücksetzimpuls D auf Null zurückgesetzt.

Der Zeitabschnitt VI ist wieder durch einen Impuls des Steuersignals C bestimmt und somit ein Abtast- und Integrationsintervall der Dauer $T_i$. In diesem Zeitabschnitt VI hat die Spannung $U_{f(VI)}$, abgesehen von dem überlagerten Rauschsignal $U_R$, im wesentlichen noch den gleichen Wert wie im Zeitabschnitt V, und da auch die gespeicherte und überlagerte Kompensationsspannung $U_{k(V)}$ unverändert bleibt, besteht die Spannung $U_{g(VI)}$ im Zeitabschnitt VI im wesentlichen wieder nur aus Rauschsignalanteilen und möglichen Fehlern der Kompensationsspannung $U_k$. Es handelt sich also wieder um ein "Korrektur-Abtastintervall".

Der durch die Abtastung und Integration der Spannung $v \cdot U_{g(VI)}$ am Ende des Zeitabschnitts VI erhaltene Integrationswert $\overline{U_{g(VI)}}$ wird in den Speicher 23 eingegeben.

Der Zeitabschnitt VII entspricht der Einschwingzeit E1' in der ersten Halbperiode HP1' der nächsten Magnetfeldperiode P'. In diesem Zeitabschnitt geht der Strom I wieder vom negativen Wert $-I_m$ auf den positiven Wert $+I_m$ über, und das Magnetfeld H wird erneut umgepolt. Somit kann dieser Zeitabschnitt nicht für die Durchflußmessung ausgenutzt werden.

Kurz vor dem Zeitabschnitt VIII wird der Integrator 16 durch einen Rücksetzimpuls D auf Null zurückgesetzt.

Der Zeitabschnitt VIII ist das letzte Abtast- und Integrationsintervall des Meßzyklus M. Im Zeitabschnitt VIII hat das Magnetfeld H wieder den konstanten Wert der ersten Polarität, und die Spannung $U_{f(VIII)}$ hat, abgesehen von zwischenzeitlichen Änderungen der Störgleichspannung $U_S$ und/oder der Durchflußgeschwindigkeit sowie von dem überlagerten Rauschsignal $U_R$ wieder den gleichen Wert wie in den Zeitintervallen I und II. Das Vorzeichen des Meßspannungsanteils $U_M$ ist wieder positiv, während das Vorzeichen des Störspannungsanteils $U_S$ unverändert bleibt. Da der Signalspannung $U_{f(VIII)}$ weiterhin die Kompensationsspannung $U_{K(V)}$ überlagert bleibt, addieren sich nunmehr die positiven Meßspannungsanteile $+U_M$ in diesen beiden Spannungen, während sich die Störgleichspannungsanteile weiterhin gegenseitig aufheben. Die Spannung $U_{g(VIII)}$ besteht daher im Zeitabschnitt VIII im wesentlichen aus dem Wert der aktuellen Meßspannung, der im Zeitabschnitt V kompensierten Meßspannung, dem möglichen Fehler der Kompensationsspannung $U_k$ und dem überlagerten Rauschsignal $U_R$. Es handelt sich also beim Zeitabschnitt VIII wieder um ein "Meßsignal-Abtastintervall". Die Spannung $v \cdot U_{g(VIII)}$ wird im Zeitabschnitt VIII durch Schließen des Schalters 17 abgetastet und im Integrator 16 über die Integrationszeit $T_i$ von Null an aufintegriert. Der am Ende des Zeitabschnitts VIII erhaltene Integrationswert $\overline{U_{g(VIII)}}$ wird von der Auswerte-Steuerung 28 in den Speicher 24 eingegeben.

Damit ist der Meßzyklus M beendet, und in den Speichern 21 bis 24 der Auswerte-Elektronik 20 stehen die im Verlauf dieses Meßzyklus erhaltenen vier Integrationswerte, die anschließend zur Gewinnung eines Nutzsignalwertes $U_N$ verarbeitet werden.

Zu diesem Zweck veranlaßt die Auswerte-Steuerung 28 die Durchführung der folgenden Operationen:

1. Die Subtrahierschaltung 25 bildet die Differenz zwischen den in den Speichern 21 und 22 gespeicherten Integrationswerten:

$$U_{25} = \overline{U_{g(IV)}} - \overline{U_{g(II)}}$$

2. Die Subtrahierschaltung 26 bildet die Differenz zwischen den in den Speichern 23 und 24 gespeicherten Integrationswerten:

$$U_{26} = \overline{U_{g(VIII)}} - \overline{U_{g(VI)}}$$

3. Die Subtrahierschaltung 27 bildet die Differenz zwischen den an den Ausgängen der Subtrahierschaltungen 25 und 26 erhaltenen Differenzwerten:

$$U_N = U_{26} - U_{25} = \overline{(\overline{U_{g(VIII)}} - \overline{U_{g(VI)}})} - \overline{(\overline{U_{g(IV)}} - \overline{U_{g(II)}})}$$

Diese Operationen haben die folgenden Bedeutungen:

1. Durch die Subtraktion in der Subtrahierschaltung 25 werden zwei Integrationswerte voneinander subtrahiert, die zwischen den beiden Kompensationsintervallen I und V erhalten worden sind, also unter Verwendung der gleichen Kompensationsspannung $U_{K(I)}$ gebildet worden sind. Alle bei der Bildung dieser Kompensationsspannung gemachten Fehler und die in dieser Kompensationsspannung enthaltenen Rauschsignalanteile werden daher durch diese Differenzbildung eliminiert. Weiter gleichen sich die in den Integrationsintervallen II und IV integrierten Rauschsignalanteile gegenseitig weiter aus. Der im zweiten Integrationswert $U_{g(IV)}$ enthaltene doppelte Wert der integrierten Meßspannung $U_M$ bleibt dagegen erhalten.

2. Durch die Subtraktion in der Subtrahierschaltung 26 werden zwei Integrationswerte voneinander subtrahiert, die zwischen dem Kompensationsintervall V des laufenden Meßzyklus M und dem ersten Kompensationsintervall I' des nächsten Meßzyklus M' erhalten worden sind, also unter Verwendung der gleichen Kompensationsspannung $U_{K(V)}$ gebildet worden sind. Es ergeben sich also wieder die gleichen Wirkungen hinsichtlich der Unterdrückung von Rauschsignalanteilen und Fehlern der Kompensationsspannung.

3. Durch die Differenzbildung in der Subtrahierschaltung 27 werden zwei von Fehlern der Kompensationsspannungen und von Rauschsignalanteilen weitgehend befreite Signalwerte voneinander subtrahiert. Dabei addieren sich die in diesen Signalwerten enthaltenen integrierten Meßspannungsanteile infolge der entgegengesetzten Vorzeichen. Der erhaltene Nutz-Spannungswert enthält daher den vierfachen Wert der integrierten Meßspannung $U_M$ (bzw. bei sich ändernder Meßspannung die Summe von vier nacheinander integrierten Meßspannungswerten).

Ein Vergleich mit dem aus der DE-PS 31 32 471 bekannten Verfahren läßt unmittelbar erkennen, daß die Ausgangssignale der beiden Subtrahierschaltungen 25 und 26 die Rolle der bei dem bekannten Verfahren zur Bildung der Nutzspannungswerte verwendeten Abtastwerte spielen. Wie bei dem bekannten Verfahren werden daher durch die Differenzbildung in der Subtrahierschaltung 27 auch lineare Änderungen der Störgleichspannung $U_S$ eliminiert. Die neu hinzugekommenen Differenzbildungen in den Subtrahierschaltungen 25 und 26 unter Verwendung von Integrationswerten, die in den zusätzlichen Stör-Abtastintervallen II und VI unmittelbar im Anschluß an die Kompensationsintervalle gewonnen werden, ergeben zusätzlich die Vorteile, daß die Rauschsignale über die zur Verfügung stehenden Beobachtungs-Zeitabschnitte II, IV, VI, VIII optimal ausgemittelt werden, und daß Fehler, die möglicherweise bei der Bildung von Kompensationsspannungen $U_K$ gemacht worden sind, eliminiert werden. Insbesondere werden vier Meßsignalwerte hinsichtlich der Meßverstärkereigenschaften und der Rauschspannungsunterdrückung gleichwertig verarbeitet. Zusätzlich können die Differenzen der in den Zeitabschnitten IV, II bzw. VIII, VI erhaltenen Integrationswerte vorteilhaft auch nach dem Verfahren der digitalen Filterung weiterverarbeitet werden, wodurch auch die veränderlichen Störgleichspannungsdifferenzen optimal unterdrückt werden.

Die gleichen Vorgänge wiederholen sich im folgenden Meßzyklus M', in dessen Verlauf wieder vier Integrationswerte in die Speicher der Auswerte-Elektronik eingegeben und in der angegebenen Weise zur Bildung eines Nutzsignalwertes verarbeitet werden.

Zusätzlich besteht die Möglichkeit, die Anzahl der gewonnenen Nutzsignalwerte zu verdoppeln, indem jeder Integrationswert zweifach ausgenutzt wird. Im Diagramm G von Fig. 2 ist ein Meßzyklus M* dargestellt, der sich jeweils zur Hälfte mit den Meßzyklen M und M' überlappt. Der Meßzyklus M* setzt sich also aus den Zeitabschnitten V, VI, VII, VIII des Meßzyklus M und aus den Zeitabschnitten I', II', III', IV' des Meßzyklus M zusammen. Wie die Meßzyklen M und M' beginnt auch der Meßzyklus M* mit einem Kompensationsintervall. Die erste Hälfte des Meßzyklus M' ist automatisch ausgeführt, wenn die Integrationswerte $U_{g(VI)}$ und $U_{g(VIII)}$ in den Zeitabschnitten VI und VIII in die Speicher 23 und 24 eingegeben worden sind, und die zweite Hälfte des Meßzyklus M* ist automatisch ausgeführt, wenn die Integrationswerte $U_{g(II')}$ und $U_{g(IV')}$ in den Zeitabschnitten II' und IV' des nächsten Meßzyklus M' in die Speicher 21 und 22 eingegeben worden sind. Durch die Bildung der Differenzen dieser vier gespeicherten Abtastwerte in der zuvor angegebenen Weise wird auch für den Meßzyklus M* ein Nutzsignalwert $U_N$ gebildet. Auf diese Weise kann nach jeder Halbperiode des Magnetfelds ein gültiger Meßwert für den Durchfluß im Rohr 1 erhalten werden.

Zu der Bemessung der verschiedenen in Fig. 2 angegebenen Zeitintervalle eines Meßzyklus ist folgendes zu bemerken:

Für einen gegebenen Aufbau des Durchflußmessers ist die Dauer $T_E$ der Einschwingzeiten E1 und E2 in jeder Periode P festgelegt. Dabei ist auch die Dauer $T_k$ der Kompensationsintervalle durch die minimale Zeitkonstante der Regelschleife der Kompensationsschaltung in der Größenordnung vorgegeben. Somit sind von der Gesamtdauer eines Meßzyklus M die Einschwing-Zeitabschnitte III und VII und die Kompensations-Zeitabschnitte I und V hinsichtlich ihrer Dauer nicht mehr frei wählbar. Diese Zeitabschnitte sind die "Totzeiten", die nicht zur Signalbeobachtung und Durchflußmessung ausgenutzt werden können. Die gesamte Totzeit $T_X$ in einem Meßzyklus M ist somit fest vorgegeben und beträgt

$$T_X = T_I + T_{III} + T_V + T_{VII}$$

Dagegen ist die Dauer der Abtast- und Integrationsintervalle II, IV, VI und VIII frei wählbar. Bei dem zuvor beschriebenen Ausführungsbeispiel haben alle Integrationsintervalle die gleiche Dauer $T_i$

$$T_{II} = T_{IV} = T_{VI} = T_{VIII} = T_i.$$

Dies ist optimal, weil die entsprechenden integrierten Signalspannungen dann mit gleicher Gewichtung in die Messung eingehen.

Es kommt also darauf an, die optimale Integrationszeit $T_i$ bezüglich der Rauschunterdrückung zu ermitteln.

Die gesamte zur Signalbeobachtung und Durchflußmessung nutzbare Zeit $T_N$ ist in jedem Meßzyklus M gleich der Summe der vier Abtast- und Integrationsintervalle:

$$T_N = T_{II} = T_{IV} + T_{VI} + T_{VIII} = 4 \cdot T_i$$

Zur Bestimmung des Optimums wird weiter angenommen, daß die spektrale Rauschspannungsdichte umgekehrt proportional der Wurzel aus der Feldfrequenz ist (vgl. z.B. 1/f-Rauschen bei Halbleitern). Bekannt ist außerdem, daß die Rauschspannung mit steigendem Verhältnis $T_N/T_P$ entsprechend dem Faktor

$$\frac{1}{\sqrt{T_N/T_P}}$$

abnimmt.

Um die resultierende Rauschspannung zu minimieren, ist somit das Minimum der Funktion

$$f(T_N) = \frac{\sqrt{T_P}}{\sqrt{T_N/T_P}} = \frac{T_P}{\sqrt{T_N}} = \frac{T_N + T_X}{\sqrt{T_N}}$$

zu finden.

Die Analyse zeigt, daß diese Funktion ihr Minimum bei

$$T_N = T_X$$

hat. Dies bedeutet, daß die gesamte Integrationszeit die gleiche Länge wie die gesamte nicht zur Signalbeobachtung ausnutzbare Zeit haben soll.

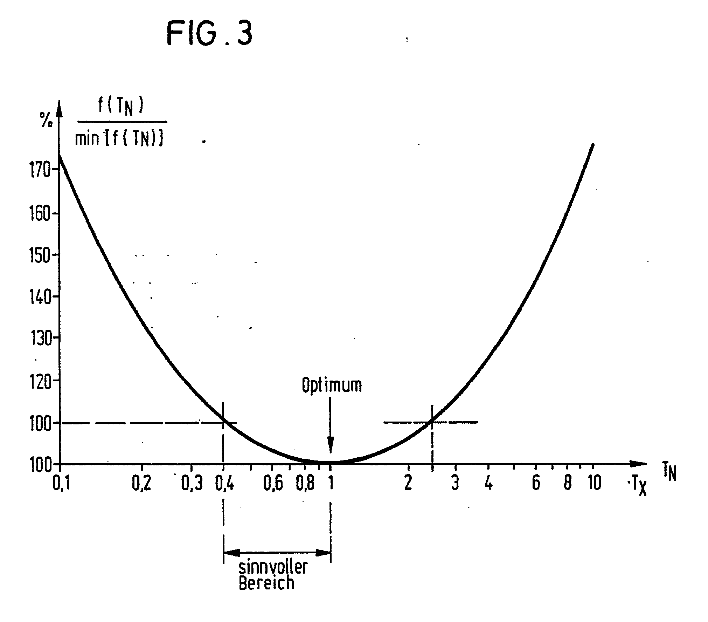

Oft will man aus anderen Gründen die Feldumschaltfrequenz möglichst hoch wählen, ohne sich dabei aber allzu weit vom Optimum der Rauschsignalunterdrückung zu entfernen. In Fig. 3 ist der relative Verlauf der Funktion $f(T_N)$ aufgezeichnet. Man erkennt, daß die totale Integrationszeit etwa im Bereich

$$T_N = 0,4T_X \dots 1,0T_X$$

gewählt werden kann, ohne daß sich die resultierende Rauschspannung um mehr als 10% erhöht.

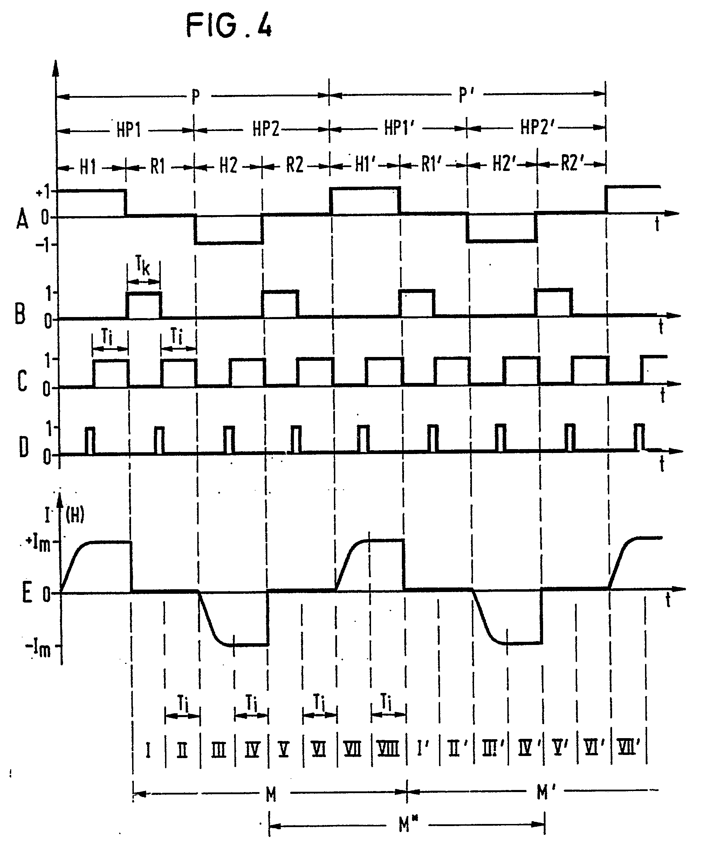

Die Diagramme A, B, C, D, E von Fig. 4 zeigen den zeitlichen Verlauf der Signale, die an den mit den gleichen Buchstaben bezeichneten Schaltungspunkten von Fig. 1 auftreten, wenn die magnetisch-induktive Durchflußmeßanordnung mit feldfreien Phasen betrieben wird, wie dies in der DE-PS 27 44 845 beschrieben ist. Soweit die in Fig. 4 eingetragenen Bezeichnungen und Werte mit denjenigen von Fig. 2 übereinstimmen, haben sie die gleiche Bedeutung; sie werden deshalb nicht nochmals im einzelnen erläutert. Die Spannungsdiagramme F und G von Fig. 2 sind in Fig. 4 zur Vereinfachung fortgelassen, da es nur auf die zeitliche Lage der Meßzyklusabschnitte bezüglich des anderen zeitlichen Verlaufs des Magnetfelds ankommt.

Der wesentliche Unterschied des Verfahrens von Fig. 4 gegenüber dem Verfahren von Fig. 2 besteht in dem anderen zeitlichen Verlauf des Magnetfelds H (Diagramm E), der durch einen anderen zeitlichen Verlauf des Steuersignals A erzielt wird. Das Steuersignal A kann drei verschiedene Werte +1, 0, -1 annehmen, und die Spulensteuerschaltung 5 ist so ausgebildet, daß auch der Spulenstrom I und demzufolge das Magnetfeld H in Abhängigkeit vom Steuersignal A drei Werte annehmen, wobei die folgende Zuordnung besteht:

| Steuersignal A | Spulenstrom I | Magnetfeld H |
|---|---|---|
| +1 | $+I_m$ | $+H_m$ |
| 0 | 0 | 0 |
| -1 | $-I_m$ | $-H_m$ |

Die Magnetfeldperiode P ist wieder in zwei Halbperioden HP1 und HP2 unterteilt. Das Steuersignal A nimmt den Signalwert +1 nur in einem ersten Abschnitt H1 der Halbperiode HP1 an, während es im restlichen Abschnitt R1 der Halbperiode HP1 den Signalwert 0 hat. In einem ersten Abschnitt H2 der zweiten Halbperiode HP2 nimmt das Steuersignal A den Signalwert -1 an, und im restlichen Abschnitt R2 der Halbperiode HP2 hat das Steuersignal A wieder den Signalwert 0.

Demzufolge gibt es in der ersten Halbperiode HP1 eine aktive Phase H1, in der das Magnetfeld H den Wert $+H_m$ annimmt, und eine sich anschließende feldfreie Phase R1, in der das Magnetfeld H den Wert 0 annimmt. In der zweiten Halbperiode HP2 gibt es eine aktive Phase H2, in der das Magnetfeld M den gegenpoligen Wert $-H_m$ annimmt, und eine sich anschließende feldfreie Phase R2, in der das Magnetfeld H den Wert 0 annimmt. Die gleichen Vorgänge wiederholen sich natürlich in der nächsten Periode P' und in jeder weiteren Periode.

Die Steuersignale B, C und die entsprechenden Zeitabschnitte des Meßzyklus M haben in bezug auf diese Magnetfeldphasen die folgenden zeitlichen Lagen:

Das Kompensationsintervall I, das mit einem Steuerimpuls B zusammenfällt, liegt im ersten Teil der feldfreien Phase R1.

Das Korrektur-Abtastintervall II, das mit einem Steuerimpuls C zusammenfällt, liegt im Anschluß an das Kompensationsintervall I ebenfalls in der feldfreien Phase R1.

Das Meßsignal-Abtastintervall IV, das ebenfalls mit einem Steuerimpuls C zusammenfällt, liegt in dem Teil der aktiven Phase H2, in dem das Magnetfeld H seinen konstanten Wert $-H_m$ erreicht hat.

Das Kompensationsintervall V liegt im ersten Teil der feldfreien Phase R2.

Das Korrektur-Abtastintervall VI liegt im Anschluß an das Kompensationsintervall V ebenfalls in der feldfreien Phase R2.

Das Meßsignal-Abtastintervall VIII liegt in der aktiven Phase H1' der folgenden Periode P'.

Die Bildung und Speicherung der Kompensationsspannung $U_k$ sowie die Abtastung und Integration der Spannung $v \cdot U_g$, die Speicherung der Integrationswerte und die Bildung der Differenzen der gespeicherten Integrationswerte in der Auswerte-Elektronik 20 erfolgen in genau der gleichen Weise, wie dies zuvor anhand der Diagramme von Fig. 2 erläutert worden ist. Desgleichen gilt auch die zuvor angegebene Regel für die optimale Bemessung der Integrationszeiten.

Es besteht jedoch der folgende Unterschied gegenüber dem zuvor beschriebenen Verfahren: Da die Bildung und Speicherung der Kompensationsspannung $U_k$ nunmehr in den feldfreien Phasen erfolgt, enthalten die gespeicherten Kompensationsspannungswerte keine Meßspannungsanteile. Jeder am Ausgang der Auswerte-Elektronik 20 erhaltene Nutzsignalwert $U_N$ entspricht daher der Summe von zwei abgetasteten Meßspannungswerten, anstatt der Summe von vier abgetasteten Meßspannungswerten bei dem Verfahren von Fig. 2.

Abgesehen von diesem Unterschied werden aber mit dem Verfahren von Fig. 4 die gleichen vorteilhaften Wirkungen wie mit dem Verfahren von Fig. 2 erzielt.

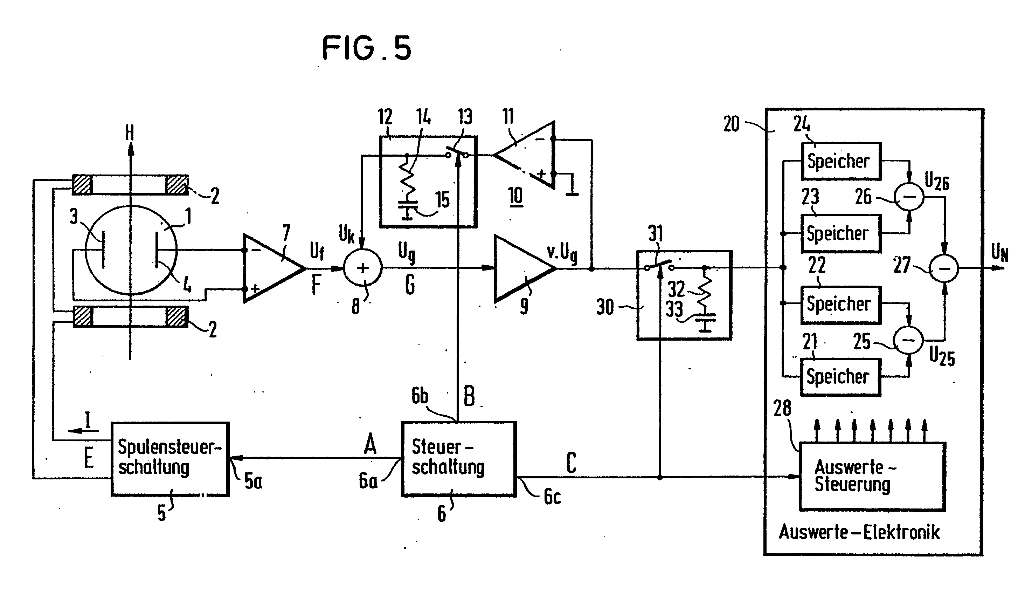

Fig. 5 zeigt eine abgeänderte Ausführungsform der Durchflußmeßanordnung, die sich von derjenigen von Fig. 1 nur dadurch unterscheidet, daß der Integrator 16 durch eine Abtast- und Speicherschaltung 30 ersetzt ist, die den gleichen Aufbau und die gleiche Funktionsweise wie die Abtast- und Speicherschaltung 12 der Kompensationsschaltung 10 haben kann. Die Abtast- und Speicherschaltung 30 enthält einen Schalter 31, einen Widerstand 32 und einen Speicherkondensator 33. Der Schalter 31 wird durch das vom Ausgang 6c der Steuerschaltung 6 abgegebene Steuersignal C betätigt. Die bei der Ausführungsform von Fig. 1 am Ausgang 6d der Steuerschaltung 6 abgegebenen Rücksetzimpulse D werden bei der Ausführungsform von Fig. 5 nicht benötigt. Die übrigen Bestandteile der Anordnung von Fig. 5 und ihre Funktionen sind gegenüber der Ausführungsform von Fig. 1 unverändert, so daß die Diagramme von Fig. 2 und von Fig. 4 grundsätzlich auch für die Anordnung von Fig. 5 gelten.

Während jedes durch das Schließen des Schalters 31 bestimmten Abtastintervalls wird die Ausgangsspannung $v \cdot U_g$ des Verstärkers 9 abgetastet und auf dem Speicherkondensator 33 gespeichert, wobei Schwankungen der Spannung $v \cdot U_g$, die während des Abtastintervalls auftreten, durch die Integrationswirkung des RC-Glieds 32, 33 gemittelt werden. Bei schnellen Anwendungen kann selbstverständlich auf den Widerstand 32 verzichtet werden. Nach dem Ende jedes Abtastintervalls steht am Ausgang der Abtast- und Speicherschaltung 30 ein Abtastwert zur Verfügung. Die nach jedem Meßsignal-Abtastintervall erhaltenen zwei neuen Abtastwerte werden mit den vorhergehenden Abtastwerten in gleicher Weise wie die bei der Anordnung nach Fig. 1 erhaltenen Integrationswerte in die Speicher 21 bis 24 der Auswerte-Elektronik 20 eingegeben, und nach Beendigung jedes Meßsignal-Abtastintervalls werden die Differenzen der gespeicherten Abtastwerte in der zuvor geschilderten Weise durch die Subtrahierschaltungen 25, 26, 27 gebildet, wodurch ein Nutzsignalwert $U_N$ erhalten wird. Selbstverständlich kann dies wieder durch einen Mikroprozessor durchgeführt werden, wenn die Abtastwerte zuvor einer Analog-Digital-Umsetzung unterworfen worden sind.

Es ist zu beachten, daß die Abtast- und Speicherschaltung trotz der Integrationswirkung des RC-Glieds 32, 33 keinen Integrator im Sinne des Integrators 16 von Fig. 1 bildet. Da die Abtast- und Speicherschaltung 30 nicht vor jedem Abtastvorgang in einen definierten Anfangszustand zurückgesetzt wird, führt sie keine Integration der abgetasteten Signalspannung $v \cdot U_g$ durch, und demzufolge ist der am Ende jedes Abtastintervalls erhaltene Abtastwert von dem Integrationswert verschieden, der bei gleicher Signalspannung im Integrator 16 erhalten würde.

Die durch die Integration bei der Durchflußmeßanordnung von Fig. 1 erhaltene Unterdrückung des Rauschsignals ist zwar optimal, doch ergibt die zusätzliche Störabtastung und Differenzbildung auch bereits bei einer einfachen Signalabtastung, wie sie in Fig. 5 angewendet wird, eine wesentliche Verbesserung gegenüber den Verfahren, die aus der DE-PS 31 32 471 und aus der DE-PS 27 44 845 bekannt sind.

**Patentansprüche**

1. Verfahren zur Kompensation von Störspannungen im Elektrodenkreis bei der magnetisch-induktiven Durchflußmessung mit periodisch umgepoltem magnetischem Gleichfeld, bei welchem das Magnetfeld in aufeinanderfolgenden Halbperioden abwechselnd gegenpolige Werte annimmt und das Nutzsignal dadurch erhalten wird, daß die Signalspannung in jeder Halbperiode während eines Meßsignal-Abtastintervalls abgetastet, der durch die Abtastung der Signalspannung in jedem Meßsignal-Abtastintervall erhaltene Meßsignalwert gespeichert und die Differenz von jeweils zwei bei gegenpoligen Werten des Magnetfeldes erhaltenen Meßsignalwerten gebildet wird, und bei welchem in einem auf jedes Meßsignal-Abtastintervall innerhalb der gleichen Halbperiode folgenden Kompensationsintervall durch Abtastung und Speicherung der Signalspannung eine der Signalspannung entgegengesetzt überlagerte Kompensationsspannung erzeugt wird, welche die Signalspannung innerhalb des Kompensationsintervalls auf den Wert Null kompensiert und bis zum nächsten Kompensationsintervall beibehalten wird, dadurch gekennzeichnet, daß

   a) die Signalspannung während eines auf jedes Kompensationsintervall innerhalb der gleichen Halbperiode unmittelbar folgenden Korrektur-Abtastintervalls, in dem die Signalspannung im wesentlichen nur aus Rauschsignalanteilen besteht, erneut abgetastet wird und der dadurch erhaltene Korrektursignalwert gespeichert wird;

   b) die Differenz der jeweils in verschiedenen Halbperioden zwischen zwei Kompensationsintervallen erhaltenen gespeicherten Meß- und Korrektursignalwerte gebildet wird;

   c) die Differenz von jeweils zwei auf diese Weise erhaltenen Differenzwerten zur Gewinnung eines Nutzsignalwerts gebildet wird.

2. Verfahren nach Anspruch 1, dadurch gekennzeichnet, daß die Signalspannung über die Dauer jedes Abtastintervalls integriert wird und der durch die Integration erhaltene Integrationswert als Signalwert gespeichert wird.

3. Verfahren nach Anspruch 2, daruch gekennzeichnet, daß alle Integrationsintervalle untereinander im wesentlichen gleich groß sind.

4. Verfahren nach Anspruch 2 oder 3, dadurch gekennzeichnet, daß in jeder Magnetfeldperiode das Verhältnis der Gesamtdauer der Integrationsintervalle zur Gesamtdauer der übrigen Zeitintervalle im Bereich von etwa 0,4 bis 1,0 liegt.

5. Verfahren nach Anspruch 4, dadurch gekennzeichnet, daß in jeder Magnetfeldperiode die Gesamtdauer der Integrationsintervalle etwa gleich der Gesamtdauer der übrigen Zeitintervalle ist.

**Claims**

1. Method of compensating interference voltages in the electrode circuit in magnetic-inductive flow measurement with periodically reverse-poled DC magnetic field in which the magnetic field assumes alternately oppositely poled values in successive half periods and the useful signal is obtained in that the signal voltage is sampled in each half period during a measuring signal sampling interval, the measuring signal value obtained by sampling the signal voltage in each measuring signal sampling interval is stored and the difference is formed between in each case two measuring signal values obtained with oppositely poled values of the magnetic field, and in which in a compensation interval following each measuring signal sampling interval within the same half period by sampling and storing the signal voltage a compensation voltage oppositely superimposed on the signal voltage is generated which compensates the signal voltage to the value zero within the compensation interval and is retained until the next compensation interval, characterized in that

   a) the signal voltage is again sampled during a correction sampling interval immediately following each compensation interval within the same half period, in which correction sampling interval the signal voltage consists essentially only of noise signal components, and the correction signal value thereby obtained is stored;

   b) the difference between the stored measuring and correction signal values obtained in each case in different half periods between two compensation intervals is formed;

   c) the difference between in each case two difference values obtained in this manner is formed to obtain a useful signal value.

2. Method according to Claim 1, characterized in that the signal voltage is integrated over the duration of each sampling interval and the integration value obtained by the integration is stored as signal value.

3. Method according to claim 2, characterized in that all the integration intervals are of substantially equal magnitude.

4. Method according to claim 2 or 3, characterized in that in each magnetic field period the ratio of the total duration of the integration intervals to the total duration of the remaining time intervals lies in the range of about 0.4 to 1.0.

5. Method according to claim 4, characterized in that in each magnetic field period the total duration of the integration intervals is substantially equal to the total duration of the remaining time intervals.

**Revendications**

1. Procédé pour compenser les tensions parasites dans le circuit d'électrodes dans le cadre de la mesure magnétoinductive de débit au moyen d'un champ magnétique continu à inversions périodiques de polarités, dans lequel le champ magnétique prend des valeurs de polarités alternativement opposées pendant des alternances successives et le signal utile est obtenu par échantillonnage de la tension de signal pour chaque alternance pendant un intervalle d'échantillonnage du signal de mesure; mise en mémoire de la valeur de signal obtenue par l'échantillonnage de la tension de signal dans chaque intervalle d'échantillonnage du signal de mesure; et calcul de la différence de deux valeurs de signal respectives correspondant à des valeurs de polarités opposées du champ magnétique, et dans lequel, dans un intervalle de compensation suivant chaque intervalle d'échantillonnage du signal de mesure à l'intérieur de la même alternance, on génère par échantillonnage et mise en mémoire de la tension de signal une tension de compensation superposée opposée à la tension de signal, cette tension de compensation annulant la tension de signal à l'intérieur de l'intervalle de compensation et étant maintenue jusqu'à l'intervalle de compensation suivant, caractérisé en ce que :

a) pendant un intervalle d'échantillonnage de correction qui suit immédiatement chaque intervalle de compensation à l'intérieur de la même alternance, intervalle d'échantillonnage de correction pendant lequel la tension de signal n'est essentiellement constituée que de composantes de bruit, on échantillonne à nouveau la tension de signal et on met en mémoire la valeur de signal ainsi obtenue ;

b) on calcule la différence des valeurs de signal de mesure et de correction mémorisées obtenues dans des alternances différentes chaque fois entre deux intervalles de compensation ;

c) on calcule la différence entre des paires respectives de valeurs de différence obtenues de cette manière pour obtenir une valeur de signal utile.

2. Procédé conforme à la revendication 1, caractérisé en ce qu'on intègre le signal de tension sur la durée de chaque intervalle d'échantillonnage et en ce qu'on mémorise comme valeur de signal la valeur d'intégration obtenue par l'intégration.

3. Procédé conforme à la revendication 2, caractérisé en ce que tous les intervalles d'intégration sont de durée sensiblement identique.

4. Procédé conforme à l'une des revendications 2 ou 3, caractérisé en ce que dans chaque période du champ magnétique, le rapport de la durée totale de l'intervalle d'intégration à la durée totale de l'intervalle de temps restant est d'environ 0,4 à 1.

5. Procédé conforme à la revendication 4, caractérisé en ce que dans chaque période du champ magnétique, la durée totale de l'intervalle d'intégration est sensiblement égale à la durée totale de l'intervalle de temps restant.

# FIG .1

Spulensteuer-schaltung

Steuer-schaltung

Integrator

Speicher

Auswerte-Steuerung

Auswerte-Elektronik

EP 0 219 725 B1

FIG.2

# FIG.3

# FIG.4

FIG.5

EP 0 219 725 B1